# FASCICULE DE BREVET EUROPEEN

(11) **EP 2 283 246 B1**
(45) Date de publication et mention de la délivrance du brevet: **10.07.2013**
(21) Numéro de dépôt: 09757708.4
(22) Date de dépôt: 04.06.2009
(51) Int. Cl.: F16D 69/04, F16D 13/64

(54) **FIXATION DE GARNITURES DE FRICTION SUR UN DISQUE D'EMBRAYAGE**
VERBINDUNG EINES REIBBELAGES AUF EINER KUPPLUNGSSCHEIBE
ATTACHMENT OF FRICTION FITTINGS TO A CLUTCH DISC

(30) Priorité: 04.06.2008 FR 0853692
(43) Date de publication de la demande: 16.02.2011
(73) Titulaire: Valeo Materiaux De Friction, 87020 Limoges (FR)
(72) Inventeur: BOUTAUD, Jean-Pierre, F-87350 Panazol (FR); JUILLARD, Eric, F-87000 Limoges (FR); BRAULT, Cyril, F-87000 Limoges (FR); VICTOR, Thierry, F-87520 Vayrac (FR)
(86) Numéro de dépôt international: PCT/FR2009/000666
(87) Numéro de publication internationale: WO 2009/147332

(56) Documents cités:
- FR-A- 1 286 058
- GB-A- 1 443 328
- US-B1- 6 244 414

## Description

L'invention concerne essentiellement un disque de friction d'embrayage, comportant des garnitures de friction sur ses deux faces opposées au voisinage de sa périphérie externe.

De façon traditionnelle, les garnitures de friction des disques d'embrayage sont fixées sur le disque au moyen de rivets, ce qui oblige à percer les garniture de friction, à former autour de ces perçages des lamages destinés à recevoir les têtes des rivets, à contre-percer la garniture opposée pour permettre le passage de l'outil de pose des rivets, à augmenter les épaisseurs des garnitures de friction pour éviter que les têtes des rivets ne viennent en contact avec les surfaces de frottement des plateaux de pression et de réaction de l'embrayage et à diminuer la surface utile des garnitures de friction.

De plus, lorsque les garnitures de friction sont fixées, par exemple par collage, sur des supports métalliques minces du type feuillard, il est nécessaire de percer ces supports métalliques pour y former des trous de passage de rivets et de positionner les garnitures de friction sur les supports métalliques avec précision pour aligner les trous formés dans les supports et dans les garnitures de friction.

Ce mode de fixation est donc relativement long et coûteux.

Le document GB-A-1 443 328 décrit une technique de soudage d'un support métallique portant une garniture de friction sur un élément ondulé formant ressort. La garniture de friction est collée sur le support métallique et comporte des orifices de passage d'électrodes de soudage du support métallique sur des rivets engagés dans des trous de l'élément formant ressort. Cette technique connue présente les inconvénients cités ci-dessus, car elle oblige à utiliser des rivets, à percer l'élément formant ressort et à aligner les orifices de la garniture avec les trous de cet élément, qui sont masqués par le support métallique de la garniture de friction.

Un disque de friction selon le préambule de la revendication 1 est connu de US-B-6,244,414.

La présente invention a notamment pour but d'apporter une solution simple, efficace, rapide et économique au problème de la fixation des garnitures de friction sur un disque d'embrayage.

Elle propose à cet effet un disque de friction d'embrayage, comprenant des garnitures de friction fixées sur deux faces opposées du disque, caractérisé en ce que les garnitures de friction sont fixées sur un feuillard métallique qui est lui-même fixé sur le disque par des points de soudure orientés sensiblement perpendiculairement au feuillard et au disque, ces points de soudure traversant le feuillard et une partie de l'épaisseur du disque et étant réalisés à travers les garnitures de friction par un faisceau laser ou un faisceau d'électrons qui volatilise la matière de friction.

Ainsi, selon l'invention, les points de soudure sont formés à travers les garnitures de friction, dont la matière est volatilisée ou vaporisée au niveau des points de soudure.

La fixation des garnitures de friction sur le disque est extrêmement rapide et ne nécessite aucun perçage ou usinage préalable des garnitures, des feuillards et du disque.

Le nombre de points de soudure ainsi que les formes et dimensions de ces points sont déterminés pour que la fixation des garnitures de friction sur le disque soit au moins aussi résistante que si elle était assurée de façon traditionnelle par des rivets.

Les points de soudure peuvent être de forme cylindrique ou bien peuvent former des zones de soudure allongées dans le plan du feuillard et du support annulaire, ces zones de soudure étant par exemple rectilignes ou en arc de cercle et parallèles à la périphérie du disque.

L'invention propose également un procédé de fixation de garnitures de friction sur un disque d'embrayage, les garnitures étant elles-mêmes fixées sur un feuillard métallique, le procédé étant caractérisé en ce qu'il consiste à former des points de soudure entre le feuillard métallique et le disque au moyen d'un faisceau laser ou d'un faisceau d'électrons qui est émis du côté du feuillard et orienté sensiblement perpendiculairement au feuillard et au disque, et qui traverse et volatilise la matière des garnitures de friction.

Si nécessaire, la soudure est réalisée en présence d'un gaz de protection de la garniture de friction, tel par exemple que de l'azote, qui permet d'éviter la calcination de la garniture de friction par le faisceau laser et l'oxydation de la zone de fusion.

L'énergie des lasers (que ce soit des sources continues ou pulsées), et la focalisation sont déterminées pour que le faisceau laser réalise, au point d'impact, une fusion du feuillard et d'une partie de l'épaisseur du disque.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe d'une friction d'embrayage selon la technique antérieure ;
- la figure 2 est une vue partielle schématique à plus grande échelle illustrant la fixation d'une garniture de friction par soudure laser sur un disque d'embrayage ;
- la figure 3 est une vue schématique partielle en perspective d'un disque d'embrayage du type progressif selon l'invention.

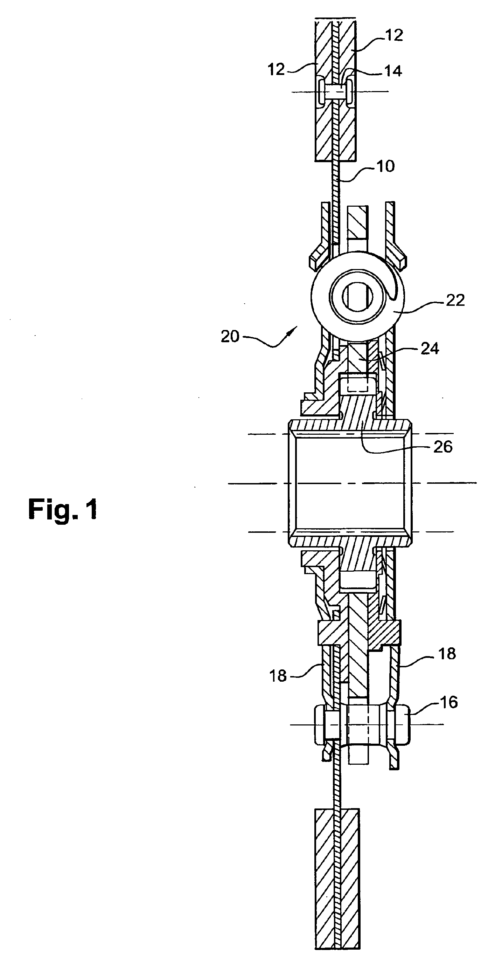

La friction d'embrayage, par exemple pour véhicule automobile, représentée schématiquement en figure 1 comprend un disque d'embrayage 10 dont la périphérie porte des garnitures de friction 12 fixées sur les deux faces opposées du disque au moyen de rivets 14.

A sa périphérie intérieure, le disque 10 est solidarisé par des rivets 16 avec des rondelles de guidage 18 d'un amortisseur de torsion 20 à ressorts 22 à disposition circonférentielle, les rondelles de guidage 18 encadrant un voile annulaire 24 dont la périphérie est en prise, avec un jeu angulaire déterminé, avec un moyeu cylindrique 26 solidaire en rotation d'un arbre de transmission (non représenté) tel par exemple que l'arbre d'entrée d'une boîte de vitesses.

La structure et le fonctionnement de cette friction d'embrayage sont bien connus de l'homme du métier et ne seront pas décrits ici plus en détail.

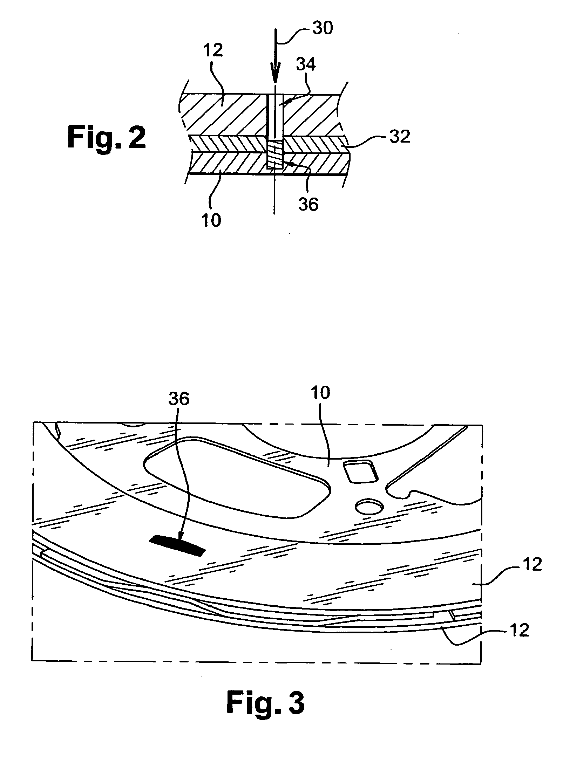

Pour éviter les inconvénients liés à la fixation des garnitures de friction 12 sur le disque 10 au moyen de rivets 14, l'invention propose, comme représenté en figure 2, de fixer ces garnitures de friction sur le disque par soudage au moyen d'un faisceau laser 30 ou d'un faisceau d'électrons qui est émis du côté de la garniture de friction 12 et qui est orienté sensiblement perpendiculairement au plan du disque 10.

La garniture de friction 12 est fixée, par exemple par collage ou par surmoulage, sur un support métallique mince 32 tel qu'un feuillard par exemple, la fixation de la garniture de friction sur le disque étant réalisée par soudage du feuillard 32 sur le disque 10.

Dans l'exemple de la figure 2, le faisceau laser 30 traverse la garniture de friction 12 et y forme un trou 34 par volatilisation de la matière de friction et atteint ensuite le feuillard 32 qu'il perce par fusion, puis le disque 10 qu'il perce également par fusion sur une partie de son épaisseur.

La fusion du feuillard 32 et d'une partie de l'épaisseur du disque 10 réalise un point de soudure 36 entre le feuillard et le disque.

La puissance et la focalisation du faisceau laser 30 sont réglées de façon à ne pas traverser le disque 10 sur toute son épaisseur.
Si nécessaire, cette soudure laser peut s'accompagner d'une projection d'un gaz neutre tel que l'azote par exemple sur la zone de soudure, pour protéger la garniture de friction 12 de tout risque de calcination et éviter l'oxydation de la zone de fusion.

Si nécessaire, cette soudure peut s'accompagner d'un apport de métal extérieur (par exemple un acier à faible teneur en carbone).

De façon pratique, les points de soudure 36 peuvent avoir une certaine étendue dans le plan du feuillard et du disque 10, de façon par exemple sensiblement linaire.

Comme représenté dans l'exemple de la figure 3 où le disque 10 qui supporte les garnitures de friction 12 est du type progressif, c'est-à-dire est élastiquement déformable en direction axiale lors du serrage des garnitures de friction entre les plateaux de pression et de réaction de l'embrayage, les zones de soudure 36 ont la forme de traits ou d'arcs de cercle parallèles à la périphérie du disque 10.

Dans un exemple de réalisation, les garnitures de friction 12 sont en matériau céramique ou composite et ont une épaisseur de 1,6 mm, leur support 32 est un feuillard métallique d'une épaisseur de 0,4 mm, le disque d'embrayage 10 est en acier et le laser utilisé pour le soudage des garnitures de friction a les caractéristiques suivantes :
- type du laser : laser CO2 - 2,5kW
- puissance du laser : 750W
- vitesse d'avance: 3000mm/minute
- gaz de protection : azote
- débit de gaz : 15 litres/minute
- pression de gaz : 1,5 bars.
La vitesse d'avance et la longueur des cordons de soudure (par exemple 15mm) déterminent une durée d'impulsion de 0,3s par soudure.
En variante, les soudures peuvent être réalisées au moyen d'un faisceau d'électrons, cette technique demandant un investissement initial supérieur à celui du soudage laser mais assurant une excellente reproductibilité des soudures d'une pièce à l'autre.

## Revendications

1. Disque de friction d'embrayage, comprenant des garnitures de friction (12) fixées sur deux faces opposées du disque (10), dans lequel les garnitures de friction (12) sont fixées sur un feuillard métallique (32) qui est lui-même fixé sur le disque (10) par des points de soudure (36), orientés sensiblement perpendiculairement au feuillard et au disque, ces points de soudure traversant le feuillard et une partie de l'épaisseur du disque **caractérisé en ce que** les points de soudure sont réalisés à travers les garnitures de friction (12) au moyen d'un faisceau laser ou d'un faisceau d'électrons qui volatilise la matière de friction.

2. Disque selon la revendication 1, **caractérisé en ce que** les points de soudure (36) ont une forme sensiblement cylindrique.

3. Disque selon la revendication 1 ou 2, **caractérisé en ce que** les points de soudure forment des zones de soudure allongées dans le plan du feuillard et du disque.

4. Disque selon la revendication 3, **caractérisé en ce que** les zones de soudure sont des traits ou des arcs de cercle (36).

5. Procédé de fixation de garnitures de friction sur un disque d'embrayage, **caractérisé en ce que**, les garnitures de friction (12) étant fixées sur un feuillard métallique (32), il consiste à former des points de soudure (36) entre le feuillard métallique et le disque (10) au moyen d'un faisceau laser (30) ou d'un faisceau d'électrons émis du côté du feuillard et orienté sensiblement perpendiculairement au feuillard et au disque, et qui traverse et volatilise la matière des garnitures de friction (12).

6. Procédé selon la revendication 5, **caractérisé en ce que** le soudage est réalisé en présence d'un gaz de protection de la garniture de friction (12), tel par exemple que de l'azote.

7. Procédé selon la revendication 5 ou 6, **caractérisé en ce que** les points de soudure sont réalisés avec un apport de métal extérieur, tel par exemple un acier à faible teneur en carbone.

## Patentansprüche

1. Reibungskupplungsscheibe, umfassend Reibbeläge (12), die an zwei entgegen gesetzten Flächen der Scheibe (10) befestigt sind, wobei die Reibbeläge (12) auf einem metallischen Bandmaterial (32) befestigt sind, welches seinerseits an der Scheibe (10) durch Schweißpunkte (36) befestigt ist, die in etwa senkrecht zum Bandmaterial und zur Scheibe ausgerichtet sind, wobei diese Schweißpunkte das Bandmaterial und einen Teil der Dicke der Scheibe durchdringen, **dadurch gekennzeichnet, dass** die Schweißpunkte quer durch die Reibbeläge (12) mittels eines Laserstrahls oder eines Elektronenstrahls ausgeführt sind, welcher das Reibmaterial verdunsten lässt.

2. Kupplungsscheibe nach Anspruch 1, **dadurch gekennzeichnet, dass** die Schweißpunkte (36) eine in etwa zylindrische Form haben.

3. Kupplungsscheibe nach Anspruch 1 oder 2, **dadurch gekennzeichnet, dass** die Schweißpunkte in der Ebene des Bandmaterials und der Scheibe lang gestreckte Schweißzonen bilden.

4. Kupplungsscheibe nach Anspruch 3, **dadurch gekennzeichnet, dass** die Schweißzonen Striche oder Kreisbögen (36) sind.

5. Verfahren zur Befestigung von Reibbelägen auf einer Kupplungsscheibe, **dadurch gekennzeichnet, dass** die Reibbeläge (12) auf einem metallischen Bandmaterial (32) befestigt sind und das Verfahren darin besteht, Schweißpunkte (36) zwischen dem metallischen Bandmaterial (32) und der Scheibe (10) mit Hilfe eines von der Seite des Bandmaterials ausgestrahlten und in etwa senkrecht zum Bandmaterial und zur Scheibe ausgerichteten Laserstrahls (30) oder eines Elektronenstrahls zu bilden, der das Material der Reibbeläge (12) durchdringt und verdunsten lässt.

6. Verfahren nach Anspruch 5, **dadurch gekennzeichnet, dass** die Schweißung unter der Anwesenheit eines Gases zum Schutz des Reibbelags (12), wie zum Beispiel Stickstoff, ausgeführt wird.

7. Verfahren nach Anspruch 5 oder 6, **dadurch gekennzeichnet, dass** die Schweißpunkte unter Zufuhr von externem Metall, wie zum Beispiel Stahl mit einem geringen Gehalt von Kohlenstoff, ausgeführt werden.

## Claims

1. Friction disc for a clutch, comprising friction linings (12) which are secured on two opposite surfaces of the disc (10), wherein the friction linings (12) are secured on a metal strip (32) which itself is secured on the disc (10) by welding spots (36), which are oriented substantially perpendicularly to the strip and to the disc, these welding spots passing through the strip and part of the thickness of the disc, **characterised in that** these welding spots are produced through the friction linings (12) by means of a laser beam or an electron beam which vaporises the friction material.

2. Disc according to claim 1, **characterised in that** the welding spots (36) have a substantially cylindrical form.

3. Disc according to claim 1 or 2, **characterised in that** the welding spots form elongate welding areas on the plane of the strip and of the disc.

4. Disc according to claim 3, **characterised in that** the welding areas are lines or arcs of a circle (36).

5. Process for securing of friction linings on a clutch disc, **characterised in that**, with the friction linings (12) being secured on a metal strip (32), it consists of forming welding spots (36) between the metal strip and the disc (10) by means of a laser beam (30) or an electron beam which is emitted on the strip side, and is oriented substantially perpendicularly to the strip and the disc, and passes through and vaporises the material of the friction linings (12).

6. Process according to claim 5, **characterised in that** the welding is carried out in the presence of a gas for protection of the friction lining (12), for example nitrogen.

7. Process according to claim 5 or 6, **characterised in that** the welding spots are produced by adding external metal, such as, for example, a steel with a low carbon content.
